Europäisches Patentamt

European Patent Office

Office européen des brevets

(19)

(11) Publication number: **0 251 492**
A2

# EUROPEAN PATENT APPLICATION

(12)

(21) Application number: 87304733.6

(22) Date of filing: 28.05.87

(51) Int. Cl.³: **G 06 F 1/00**

(30) Priority: 02.06.86 JP 83714/86

(43) Date of publication of application:
07.01.88 Bulletin 88/1

(84) Designated Contracting States:
DE FR GB

(71) Applicant: SEMICONDUCTOR ENERGY LABORATORY
CO., LTD.
398 Hase
Atsugi-shi Kanagawa-ken, 243(JP)

(72) Inventor: Yamazaki, Shunpei
21-21, Kitakarasuyama 7-Chome
Setagaya-Ku Tokyo 157(JP)

(72) Inventor: Hamatani, Toshiji
Flat Ochiai 201 1144, Hase
Atsugi-Shi Kanagawa-Ken 243(JP)

(74) Representative: Milhench, Howard Leslie et al,
R.G.C. Jenkins & Co. 26 Caxton Street
London SW1H 0RJ(GB)

(54) Integrated computer system.

(57) A personal computer system comprising, for example, a processor, a keyboard, an external memory such as a floppy disk drive, and a display, is formed as an integrated unit having a flat upper surface so that, when placed on a desk, the upper surface of the computer system can be used as the working surface of the desk. For this reason, the amount of space exclusively occupied by the system is correspondingly small.

FIG. 1

EP 0 251 492 A2

Croydon Printing Company Ltd.

1

<u>TITLE OF THE INVENTION</u>

<u>INTEGRATED COMPUTER SYSTEM</u>

<u>BACKGROUND OF THE INVENTION</u>

The present invention relates generally to computer systems and more particularly relates to so-called personal computer systems of a type suitable for use in offices and schools.

In recent years, computer systems have been introduced into various places such as the offices of companies, schools and so on. In particular, there is an increasing number of schools where each pupil is provided with a computer system for his own use during tuition.

However, because computer systems conventionally consist of a number of separate devices, such as a processor, a display unit such as a CRT, an input instrument such as a keyboard, an external memory system such as a floppy disc drive, and a printer, a desk

2

specifically for the computer system has commonly had to be provided in addition to the main desk normally provided for doing clerical work. Because of this, the installation of computer systems in classrooms has required a large amount of space to be made available to each pupil.

SUMMARY OF THE INVENTION

It is therefore an object of the invention to provide a computer system which can be placed on a desk for example without hindering a person from doing his clerical work at the same desk.

It is another object of the invention to provide a computer system which requires only a very small space which is occupied exclusively by the system.

These and further objects of the invention are achieved by a computer system wherein all of the several constituent parts of the system, that is to say for example the processor, display, keyboard, disc drive and printer, are integrated into a unitary structure configured so as either to form the top of a desk or to be able to be laid on top of a desk so as in either case to be usable as the working surface of the desk.

Additional features of the present invention are set forth with particularity in the appended claims and will become clear to those possessed of the relevant skills from consideration of the following description of an embodiment of the invention given with reference to the accompanying drawing.

## BRIEF DESCRIPTION OF THE DRAWING

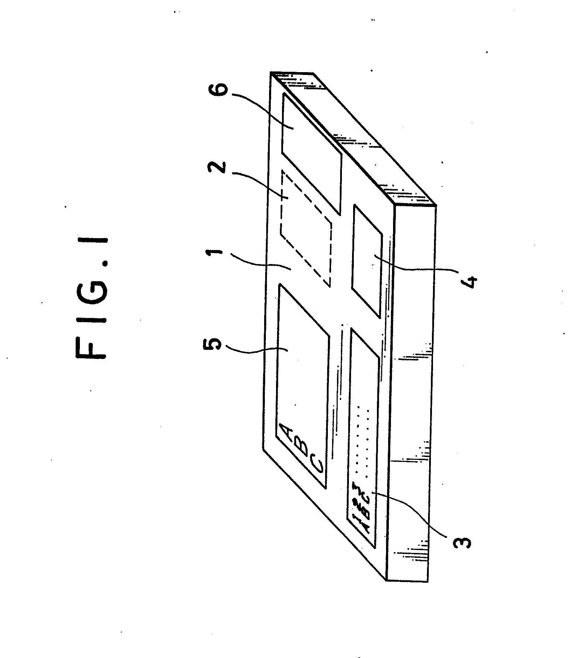

Fig.1 is a perspective view of an exemplary integrated personal computer system in accordance with the present invention.

## DETAILED DESCRIPTION OF THE PREFERRED EMBODIMENT OF THE INVENTION

Referring now to Fig.1, a computer system in accordance with the invention is schematically illustrated. In the figure, the computer system is formed as an integrated unit 1 comprising a processor 2, an input instrument 3, an external memory 4 for storing information and a display 5. The processor 2 includes at least a central processing unit and a memory. The upper surface of each constituent part of the system is configured so as to be flush with all other upper surfaces of the system respectively, or alternatively an outer frame for enclosing the system is provided, so that in either case the computer system has a flat upper surface. By virtue of this structure, it is possible to use the entire upper surface of the computer system as a desk top for clerical work when the computer system is not being used, and to use the upper surface of the system other than the parts that are above the input instrument 3, the external memory 4 and the display 5 for holding books or other stationery at all times.

The computer system may be powered from the commercial electricity supply. However, it is also possible to provide a built-in electric power source 6 such as a solar cell or a storage battery. The display 5 is a flat display such as a liquid crystal display, a plasma display, an electroluminescent display or the like. A liquid crystal display is preferred on account of its low electricity consumption. As an option, a structure may be provided for enabling the display 5 to be supported at a suitable angle relative to the upper surface of the system 1 so that the operator or pupil can more easily see the display. Although the input instrument 3 is desirably a flat, touch-responsive type of keyboard, it may be a keyboard having an uneven upper surface or a keyboard provided with a flat cover over its upper surface. The memory 4 may for example be a floppy disk drive unit.

If the system as described is placed on a desk, then the height of the working surface of the desk will be increased by the thickness of the system, so that the operator or pupil has to adjust the height of his chair to compensate for increased working surface height. However, if the chair has to be raised by more than 100mm, the operator or pupil may feel strange. Because of this, the thickness of the unitary computer system 1 is desirably less than 100mm so that use of the system does not result in reduced work efficiency.

While the present invention has been described with reference to a particular embodiment, the invention should not be regarded as being limited to the embodiment described, and many variations and modifications will occur to those skilled in the art without departure from the spirit and scope of the invention. For example, some interfaces and connectors can be provided to enable communication between the system and external equipment to be established, for example to enable the exchange of information with an external memory. Furthermore, whilst in the described embodiment the unit is designed to be laid on top of a desk, it can be manufactured so as itself to constitute the flat top of a desk.

1

CLAIMS

1. An integrated unit for a personal computer system, said unit comprising:

a built-in processor;

a built-in input instrument for inputting information to said processor; and

a built-in display connected with said processor.

2. A unit as claimed in claim 1 which is configured so as either to form the top of a desk or to be able to be laid on top of a desk so as in either case to be usable as the working surface of the desk.

3. A unit as achieved in claim 2 wherein the thickness of the unit is not greater than 100 mm.

4. A unit as claimed in claim 1 or 2 or 3 wherein the upper surface of the unit is an even surface.

5. A unit as claimed in any preceding claim wherein said processor comprises at least one central processing unit and one internal memory.

6. A unit as claimed in any preceding claim further comprising a built-in memory device.

7. A unit as claimed in claim 6 wherein said built-in memory device is a floppy disk drive.

8. A unit as claimed in any preceding claim further comprising an interface for communicating with external equipment.

9. A unit as claimed in any preceding claim further comprising a built-in power source such as, for example, a solar cell.

10. A unit as claimed in any preceding claim wherein said display is a liquid crystal display or an electroluminescent display.

# FIG.1